Europäisches Patentamt

European Patent Office

Office européen des brevets

(19)

(11) Veröffentlichungsnummer: **0 335 886 B1**

(12) # EUROPÄISCHE PATENTSCHRIFT

(45) Veröffentlichungstag der Patentschrift :
**15.04.92 Patentblatt 92/16**

(51) Int. Cl.$^5$: **B62D 5/22,** B62D 5/083

(21) Anmeldenummer : **87907954.9**

(22) Anmeldetag : **27.11.87**

(86) Internationale Anmeldenummer :
**PCT/EP87/00738**

(87) Internationale Veröffentlichungsnummer :
**WO 88/04252 16.06.88 Gazette 88/13**

(54) **HYDRAULISCHE ZAHNSTANGEN-HILFSKRAFTLENKUNG.**

Teilanmeldung 91105995.4 eingereicht am 27/11/87.

(30) Priorität : **06.12.86 PCT/EP86/00716**

(43) Veröffentlichungstag der Anmeldung :
**11.10.89 Patentblatt 89/41**

(45) Bekanntmachung des Hinweises auf die Patenterteilung :
**15.04.92 Patentblatt 92/16**

(84) Benannte Vertragsstaaten :
**DE GB IT**

(56) Entgegenhaltungen :
**BE-A- 641 063**
**DE-A- 1 933 403**
**DE-A- 3 425 648**
**FR-A- 1 577 716**
**US-A- 3 102 554**

(73) Patentinhaber : **ZF FRIEDRICHSHAFEN Aktiengesellschaft**
**Löwentaler Strasse 100 Postfach 2520**
**W-7990 Friedrichshafen 1 (DE)**

(72) Erfinder : **ELSER, Dieter**
**Jägerstra e 10**
**W-7087 Essingen (DE)**
Erfinder : **SCHURR, Rudolf**
**Fahrbachstra e 147**
**W-7080 Aalen (DE)**

(74) Vertreter : **Raue, Reimund**
**ZF FRIEDRICHSHAFEN Aktiengesellschaft**
**Löwentalerstrasse 100 Postfach 2520**
**W-7990 Friedrichshafen 1 (DE)**

EP 0 335 886 B1

**Beschreibung**

Die Erfindung betrifft einie hydraulische Hilfskraftlenkung für Kraftfahrzeuge in der Zahnstangenbauart, nach dem Oberbegriff von Anspruch 1.

In einer bekannten Hilfskraftlendung (DE-A-34 25 648) steht eine Lenkspindel über eine Mitnahmeeinrichtung, die ein Verdrehspiel zuläßt, mit einem Antriebsritzel in Verbindung. Das Ritzel ist mit einer Ventilhülse eines Drehschieberventils gekuppelt. Das Ritzel hat eine Durchgangsbohrung für eine Stange. Diese Stange ist an ihrem einen Ende mit der Lenkspindel und an ihrem anderen Ende in einem Drehschieber eines Drehschieberventils befestigt. Die Lenkspindel ist außerdem noch über einen die Stange umschließenden hohlem Drehstab an das Ritzel angeschlossen. Das Ritzel greift in eine Zahnstange ein, deren Bewegung durch eine vom Drehschieberventil gesteuerte Servoeinrichtung unterstützt ist. Die bekannte Lenkung hat wegen der zusätzlichen Stange und der notwendigen Stiftverbinidung zwischen dem Lenkritzel und der Ventilhülse einen verhältnismäßig hohen Bauteileaufwand. Hinzu kommt eine beträchtliche Baulänge in axialer Richtung der Lenkspindel.

Der Erfindung liegt die Aufgabe zugrunde, einie Hilfskraftlenkung der angeführten Bauart in möglichst gedrungener Bauweise zu schaffen. Dabei sollen die miteinander im Antriebsverbindung stehenden Bauteile (Zahnstange, Antriebsritzel) in einem einteiligen Gehäuse mit exakt festgelegten Abständen untergebracht sein.

Diese Aufgabe ist durch die Merkmale der Ansprüche 1 und 2 gelöst.

Nach einem Merkmal der Erfindung sieht man als Mittenzentrierung im Drehschieber federbelastete Kolben vor, welche auf in dachförmigen Schrägflächen der Ventilhülse abgestützte Wälzkörper drücken.

Weiter greift als Anschlagbegrenzung für die Relativverdrehung (Steuerspiel) zwischen der Lenkspindel und dem Antriebsritzel ein in der Lenkspindel fester Querstift im eine Bohrung des Antriebsritzels ein. Dadurch, daß die Lenkspindel unmittelbar mit dem Antriebsritzel gekoppelt ist und die Mittenzentrierung innerhalb des Drehschieberventils liegt, ergibt sich eine sehr kurze axiale Baulänge des Lenkgetriebes.

Nach einem weiteren Merkmal der Erfindung läßt sich auch die Einbauhöhe des Lenkgetriebes verringern. Dies geschieht dadurch, daß der Kolben des Arbeitszylinders mit einer in das Antriebsritzel eingreifenden Verzahnung versehen ist, deren Eingriffsebene der Eingriffsebene der Zahnstange gegenüber liegt. Durch diese Maßnahme bleibt der Abstand von Arbeitskolben und Zahnstange klein. Da Zahnstange, Antriebsritzel und Arbeitskolben in einem gemeinsamen Gehäuse untergebracht sind, lassen sich die Zahneingriffe genau festlegen.

Weitere Einzelheiten der Erfindung sind anhand eines in der Zeichnung dargestellten Ausführungsbeispiels näher erläutert. Es zeigen:

Fig. 1 einen Längsschnitt durch eine Zahnstangen-Hilfskrattlenkung;

Fig. 2 einen verkleinerten Schnitt nach der Linie II-II in Fig. 1.

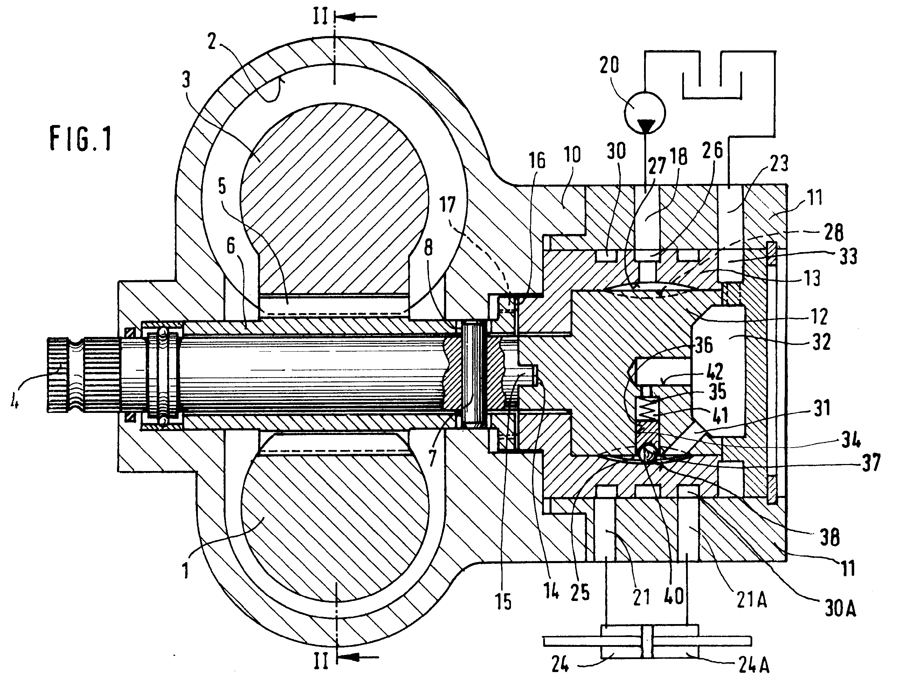

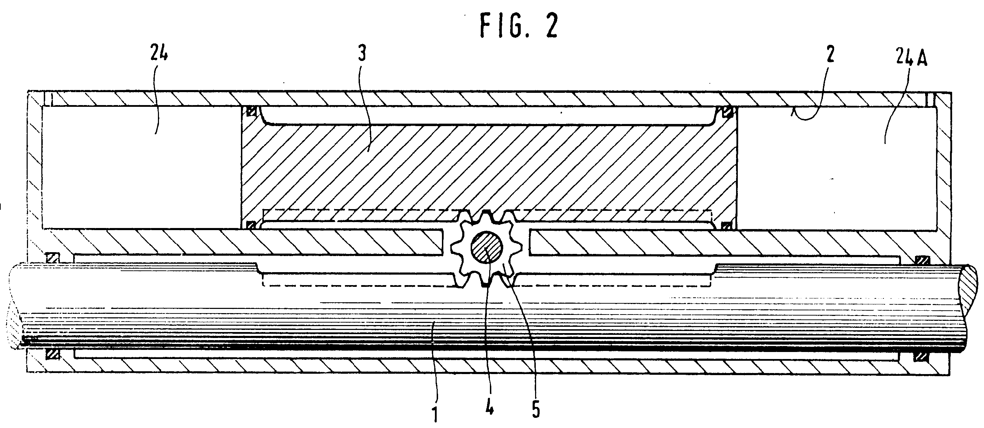

In Fig. 1 und 2 ist parallel zu einer Zahnstange 1 ein Arbeitszylinder 2 angeordnet. Die Zahnstange 1 steht über nicht gezeichnete Spurstangen mit lenkbaren Rädern in Verbindung. Die Zahnstange 1 und ein im Arbeitszylinder 2 verschiebbarer Servokolben 3 greifen mit ihren Verzahnungen, deren Eingriffsebenen sich gegenüberligen, in ein auf einer Lenkspindel 4 gelagertes Ritzel 5 ein. Das Ritzel ist mit einer Buchse 6 einteilig ausgeführt. Ein durch die Lenkspindel 4 hindurchgeführter Querbolzen 7 greift mit einem Steuerspiel in eine Bohrung 8 der Buchse 6 ein. An ein Lenkgehäuse 10 ist ein Ventilgehäuse 11 für ein aus einem Drehschieber 12 und einer Ventilhülse 13 bestehendes Drehschieberventil angebaut. Der Drehschieber 12 hat eine Nut 14, in die zur Drehmitnahme ein Keil 15 der Lenkspindel nach Art einer Kreuzschlitzkupplung spielfrei eingreift. In ähnlicher Weise greifen an der Ventilhülse 13 vorhandene Klauen 16 in entsprechende Aussparungen 17 der Buchse 6 spielfrei ein. Auf diese Weise ist eine Fluchtungsfehler ausgleichende Kreuzschlitzverbindung mit dem Drehschieberventil 12, 13 hergestellt. Das Ventilgehäuse 11 hat einen Zulaufanschluß 18 für eine Hochdruckpumpe 20, zwei Arbeitszylinderanschlüsse 21 und 21A und einen Rücklaufanschluß 23. Die Arbeitszylinderanschlüsse 21 und 21A stehen mit Druckräumen 24 bzw. 24A in Verbindung. Der Arbeitskolben 3 unterstützt die Lenkbewegung gegenläufig zur Zahnstange 1.

Aus Fig. 1 ist ersichtlich, daß der Zulaufanschluß 18 über eine Ringnut 26 an axiale Zulaufsteuernuten, z. B. 27, der Ventilhülse 13 angeschlossen ist. Die Zulaufsteuernuten 27 arbeiten in bekannter Weise mit axialen Steuernuten, z. B. 28, im Drehschieber 12 zusammen, die über nicht sichtbare Kanäle mit Ringnuten 30 bzw. 30A der Arbeitszylinderanschlüsse 21 bzw. 21A in Verbindung treten können. Weiter sind axiale Rücklaufsteuernuten, z. B. 25, in der Ventilhülse 13 vorgesehen, die über schräge Bohrungen 31 im Drehschieber 12 an einen Rücklaufraum 32 anschließbar sind. Der Rücklaufraum 32 hat über eine Ringnut 33 mit dem Rücklaufanschluß 23 Verbindung. In beispielsweise drei in gleichem Winkel zueinander angeordneten Radialbohrungen 34 sind durch Zentrierfedern 35 belastete Kolben 36 eingesetzt. Die Kolben 36 weisen kegelförmige Ansenkungen 37 auf. In die gegenüberliegende Rücklaufsteuernut 25 der Ventilbuchse 13 sind dachförmige, in Umfangsrichtung verlaufende Schrägflächen 38 eingearbeitet. Zwischen den Ansenkungen 37 und den Schrägflächen 38 sind Wälzkörper 40 eingespannt. Federräume 41 haben über eine Axialbohrung 42 mit dem Rücklaufraum 32 Verbindung. Die Kraft der Zentrierfedern 35 bewirkt hierbei, daß die Wälzkörper 40 von den Schrägflächen 38 zur tiefsten Stelle zurückrollen, so daß das Drehschieberventil 12, 13, sobald keine Kraft am Lenkhandrad wirkt, in der Neutralstellung exakt auf Mitte steht.

Dreht der Fahrer am der Lenkspindel 4, so verdreht sich der Drehschieber 12 innerhalb des durch die Bohrung 8 und den Querbolzen 7 festgelegten Steuerspiels um einen bestimmten Winkelweg gegenüber der Ventilhülse 13. Die mit dem Antriebsritzel 5 gekoppelte Buchse 6 verharrt zunächst noch in ihrer Lage, da ja die Zahnstange 1 und damit auch das Ritzel 5 durch den Lenkwiderstand der Räder festgehalten werden. Dabei laufen die Wälzkörper 40 aus ihrer Zentrierstellung auf die Schrägflächen 38 auf. Durch diese Relativverdrehung des Drehschiebers 12 gegenüber der Ventilhülse 13 läßt sich Drucköl in einen der Druckräume 24 oder 24A einsteuern. Die Kraft des Druckes verschiebt den Servokolben 3, der über das Antriebsritzel 5 die Zahnstange 1 antreibt. Die vom Fahrer eingeleitete Lenkbewegung wird somit hydraulisch unterstützt. Sobald der Fahrer mit Lenken aufhört, stellt die Mittenzentrierung 35, 36, 38, 40 das Drehschieberventil 12, 13 wieder in die Neutralstellung zurück.

Bezugzeichen

| | |
|---|---|
| 1 | Zahnstange |
| 2 | Arbeitszylinder |
| 3 | Servokolben |
| 4 | Lenkspindel |
| 5 | Ritzel |
| 6 | Buchse |
| 7 | Querbolzen |
| 8 | Bohrung |
| 9 | - |
| 10 | Lenkungsgehäuse |
| 11 | Ventilgehäuse |
| 12 | Drehschieber |
| 13 | Ventilhülse |
| 14 | Nut |
| 15 | Keil |
| 16 | Klauen |
| 17 | Aussparungen |
| 18 | Zulaufanschluß |
| 19 | - |
| 20 | Hochdruckpumpe |
| 21, 21A | Arbeitszylinderanschluß |
| 22 | - |
| 23 | Rücklaufanschluß |
| 24, | 24A Druckraum |
| 25 | Rücklaufsteuernut |
| 26 | Ringnut |
| 27 | Zulaufsteuernuten |
| 28 | Steuernuten |
| 29 | - |
| 30, 30A | Ringnut |
| 31 | Bohrung |
| 32 | Rücklaufraum |
| 33 | Ringnut |
| 34 | Radialbohrungen |
| 35 | Zentrierfedern |
| 36 | Kolben |
| 37 | kegelförmige Ansenkungen |
| 38 | dachförmige Schrägflächen |
| 39 | - |
| 40 | Wälzkörper |

3

41 Federräume
42 Axialbohrung

## Patentansprüche

1. Hydraulische Hiltskraftlenkung für Krattfahrzeuge mit folgenden Merkmalen:
– eine durch ein Lenkhandrad drehbare Lenkspindel (4) steht mit einem Verdrehspiel mit einem in eine Zahnstange (1) eingreifenden Antriebsritzel (5) in Verbindung;
– die Lenkspindel hat mit dem Drehschieber (12) eines Drehschieberventils Verbindung;
– das Antriebsritzel ist mit einer den Drehschieber (12) umgebenden Ventilhülse (13) verbunden;
– das Drehschieberventil (Drehschieber und Ventilhülse) weise eine Mittenzentrierung auf,
**gekennzeichnet** durch folgende Merkmale:
– als Mittenzentrierung im Drehschieber (12) sind durch Zentrierfedern (35) belastete Kolben (36) vorgesehen, die sich über Wälzkörper (40) in dachförmigen Schrägflächen (38) der Ventilhülse (13) abstützen, und
– zur Erzielung einer Anschlagbegrenzung für das Verdrehspiel greift ein in der Lenkspindel (4) fester Querstift (7) in eine Bohrung des Antriebsritzels (5) ein.
2. Hydraulische Hilfskraftlenkung nach Anspruch 1, dadurch **gekennzeichnet**, daß der Servokolben (3) mit einer in das Antriebsritzel (5) eingreifenden Verzahnung versehen ist, deren Eingriffsebene der Eingriffsebene der Zahnstange (I) gegenüberliegt.

## Claims

1. Hydraulic power steering system for motor vehicles having the following features:
– a steering spindle (4), which can be rotated by a steering wheel, is connected with rotational play to a pinion (5), which engages with : rack (1);
– the steering spindle is connected to the rotor (12) of a rotary valve;
– the pinion is connected to a valve sleeve (13) surrounding the rotor (12);
– the rotary valve (rotor and valve sleeve) comprises a centering means,
characterised by the following features:
– pistons (36), which are loaded by centering springs (35), are provided as the centering means in the rotor (12) and are supported via rolling members (40) in roof-shaped inclined surfaces (38) of the valve sleeve (13), and
– a transverse pin (7), which is fixed in the steering spindle (4), engages in a hole in the pinion (5) in order to limit the rotational play.
2. Hydraulic power steering system according to claim : characterised in that the servo piston (3) is provided with a tooth system which engages with the pinion (5) and the plane of engagement of which is opposite the plane of engagement of the rack (1).

## Revendications

1. Mécanisme de direction à assistance hydraulique pour véhicules présentant les caractéristiques suivantes:
– une colonne de direction (4) rotative au moyen d'un volant de braquage est reliée à un pignon d'entraînement (5) engrenant dans une crémaillère (1);
– la colonne de direction est en liaison avec le distributeur rotatif (12) d'une soupape de distributeur rotatif;
– le pignon d'entraînement est relié à une douille de soupape (13) entourant le distributeur rotatif (12);
– la soupape du distributeur rotatif (distrubiteur rotatif et douille de soupape) présente un centrage,
**caractérisé** comme suit:
– des pistons (36) sollicités par des ressorts de centrage (35) et qui prennent appui sur des corps de roulement (40) par des surfaces inclinées en forme de toit (38) de la douille de soupape (13) sont prévus en tant que centrage dans le distributeur rotatif (12) et
– pour l'obtention d'une limitation de butée pour le jeu de rotation, un goujon transversal (7) fixé dans la colonne de direction (4) engrène dans un perçage du pignon d'entraînement (5).
2. Mécanisme de direction à assistance hydraulique selon la revendication 1 , **caractérisé** en ce que le servo-piston (3) est pourvu d'une denture engrenant dans le pignon d'entraînement (5) et dont le plan d'action fait face au plan d'action de la crémaillère (1).

FIG.1

# FIG. 2

EP 0 335 886 B1